# EUROPEAN PATENT APPLICATION

(11) **EP 0 636 319 A2**
(43) Date of publication of application: **01.02.1995**
(21) Application number: 94305044.3
(22) Date of filing: 08.07.1994
(51) Int. Cl.: A23C 9/142, C12H 1/06

(54) **Method of filtering a protein-containing fluid**

(30) Priority: 26.07.1993 US 97386
(71) Applicant: Pall Corporation, East Hills, New York 11548 (US)
(72) Inventor: Dehn, Joseph W., Great Neck, New York 11023 (US); Degen, Peter John, Huntington, New York 11743 (US); Alex, Tony, Merrick New York 11566 (US); Gildersleeve, Michael R., Nesconset, New York 11767 (US)
(74) Representative: Knott, Stephen Gilbert

(57) **Abstract**

The present invention provides a method of filtering a protein-containing fluid, such as milk, beer, wine, or the like, comprising adding citrate ions to the protein-containing fluid prior to passing the protein-containing fluid through a porous medium, such as a microporous membrane.

## Description

### TECHNICAL FIELD OF THE INVENTION

The present invention pertains to a method of filtering a protein-containing fluid through a porous medium in such a manner so as to significantly increase the time during which useful filtration can be carried out and so as to forestall the clogging of the porous medium.

### BACKGROUND OF THE INVENTION

Porous media, particularly microporous membranes, are used to filter a variety of fluids. During the course of filtering fluids, the porous media eventually become clogged or plugged with impurities and/or other fluid components. This is particularly a problem in the filtration of protein-containing fluids. Natural proteins, such as those in milk, beer, and wine, can quickly plug porous media such as microporous membranes. In the filtration of such protein-containing fluids, it is typically desirable to maintain a constant filtrate flow through the porous medium by increasing the upstream pressure over time. As a result, however, pore clogging increases, and the flow through the porous medium becomes impeded, at an exponential rate. Thus, even though fluid can perhaps be passed through the porous medium with a high upstream applied pressure, e.g., more than 15 psi, the effective life of the porous medium is essentially over when an undesirably high upstream pressure, e.g., about 5-10 psi or so, is required to maintain satisfactory filtrate flow through the porous medium.

While a clogged filtration medium can be replaced, the costs involved in such replacement can be quite significant. Thus, many techniques have been developed to unclog porous media. These unclogging techniques, however, may damage porous media, particularly microporous membranes, or leave contaminants in the porous media if not thoroughly washed prior to reuse. In addition, both the replacement of porous media and the unclogging procedures typically involve halting the filtration process, thereby resulting in potentially significant and undesirable downtime in the filtration process.

Accordingly, there remains a need for a method of filtering a protein-containing fluid through a porous medium, particularly a microporous membrane, such that clogging of the porous medium is forestalled and filtration downtime is reduced. Such a method should also provide for an increased period of time during which useful filtration of a protein-containing fluid can be carried out, without a significantly increased upstream pressure to maintain a constant filtrate flow through the porous medium. Furthermore, such a method should not run the risk of damaging the porous medium or the risk of introducing contaminants into the porous medium and/or fluid being filtered by the porous medium. The method of filtering a protein-containing fluid through a porous medium should also be such that it can be efficiently and economically used. The present invention provides such a method of filtering a protein-containing fluid through a porous medium.

These and other objects and advantages of the present invention, as well as additional inventive features, will be apparent from the description of the invention provided herein.

### BRIEF SUMMARY OF THE INVENTION

The present invention provides a method of filtering a protein-containing fluid comprising adding citrate ions to a protein-containing fluid prior to passing the protein-containing fluid through a porous medium, particularly a microporous membrane. The protein-containing fluid will typically be a natural protein-containing fluid such as milk, beer, wine, or the like.

### BRIEF DESCRIPTION OF THE DRAWINGS

Figure 1 is a graph of upstream pressure increase (psi) versus filtration time (minutes) observed in the filtration of skim milk to which 0 wt.% (▲), 0.01 wt.% (■), 0.1 wt.% (△), and 0.5 wt.% (*) citrate salt has been added prior to the filtration of the skim milk through a microporous membrane.

Figure 2 is a graph of upstream pressure increase (psi) versus filtration time (minutes) observed in the filtration of 2% fat milk to which 0 wt.% (□), 0.02 wt.% (▲), 0.1 wt.% (△), and 0.5 wt.% (■) citrate salt has been added prior to the filtration of the 2% fat milk through a microporous membrane.

### DESCRIPTION OF THE PREFERRED EMBODIMENTS

The present invention is predicated on the surprising discovery that the addition of citrate ions to a protein-containing fluid provides for a significantly increased period of time during which useful filtration through a porous medium can be carried out and significantly forestalls pore clogging in the porous medium used to filter the protein-containing fluid.

The present invention provides a method of filtering a protein-containing fluid comprising adding citrate ions to a protein-containing fluid prior to passing the protein-containing fluid through a porous medium. The protein-containing fluid may be any such fluid, but will typically be a natural protein-containing fluid such as milk, beer, wine, or the like. Citrate ions have been found to be particularly effective in increasing the useful filtration time, and in forestalling the clogging, of porous media such as microporous membranes used in the filtration of milk and beer, particularly milk.

The citrate ions may be added or introduced to the protein-containing fluid in any suitable manner. Preferably, the citrate ions are added to the protein-containing fluid by the addition of a citrate salt to the protein-containing fluid, either in solid form or predissolved in water. Suitable citrate salts include potassium and sodium citrate salts, among others, and combinations thereof. Trisodium citrate is most preferred.

While the citrate ions may be added to the protein-containing fluid in any suitable amount, it has been found that the added concentration of citrate ions can be rather low, e.g., 1 wt.% or less, and still be effective. The preferred added citrate ion concentration is up to about 0.5 wt.%, preferably about 0.01 wt.% to about 0.5 wt.%., and most preferably about 0.01 wt.% to about 0.2 wt.%, although citrate ion concentrations higher than 0.5 wt.%, or even higher than 1 wt.%, can be used if necessary and desirable.

Since some natural-protein containing fluids already contain citrate ions, such as milk, the low concentration of citrate ions used in the course of practicing the present invention can avoid the inadvertent introduction of an unnatural impurity into the fluid being treated with the porous medium. Indeed, natural milk can inherently contain about 0.10-0.16 wt.% citrate ion, and U.S. federal regulations allow for up to 0.3-0.5 wt.% citrate ion in some milk products, e.g., powdered and evaporated milk. Thus, the present inventive method practiced with a low concentration of citrate ions is particularly well-suited for the filtration of milk through porous media, especially with respect to the filtration of milk through a microporous membrane to obtain milk of a reduced bacterial content or to render the milk sterile.

The present inventive method is suitable for use on any porous medium prepared from any suitable material, such as microporous membranes, metal filtration media, ceramic filters, and fibrous woven and nonwoven media. The present inventive method is particularly well-suited for use on a microporous membrane, such as those prepared in accordance with U.S. Patent 4,340,479. The treatment method is especially useful with respect to polyamide membranes, e.g., nylon membranes, which can be used in the filtration of a natural protein-containing fluid such as milk, in accordance, for example, with GB2267811A.

The present invention also provides a protein-containing fluid prepared in accordance with the filtration method of the present invention, particularly with respect to a natural protein-containing fluid, such as milk, beer, wine, and the like, especially milk. This is particularly significant in the filtration of such fluids through a microporous membrane to lower their bacterial content or to render them sterile. The present inventive method allows for significantly increased efficiencies in such filtration processes and ensures the commercial viability of those filtration processes. In that respect, therefore, the present invention provides sterile protein-containing fluids, particularly milk, characterized by the presence of added citrate ions and the absence of Bacillus cereus bacteria, campylobacteria, listeria, and/or E. coli. The present invention also provides for milk having a bacterial content of less than about 10³ bacteria per ml, having retained more organoleptic components than that found in pasteurized milk with the same bacterial content, and having added citrate ion. The citrate ion in such sterile or reduced bacterial content milk, or other protein-containing fluids, will be found in a concentration above that normally found in the milk or other fluid, e.g., more than about 0.16 wt.%, generally about 0.17 wt.% or higher, and as high as 0.20 wt.% or higher.

The following examples further illustrate the present invention but, of course, should not be construed as in any way limiting its scope.

### Example 1

This example demonstrates the use of the present invention in forestalling the clogging of a porous medium in the filtration of a protein-containing fluid as a result of the addition of citrate ions to the protein-containing fluid prior to filtration through the porous medium.

Skim milk was heated to 55^{o}C, homogenized at 2500/500 psi in a two-stage homogenizer, and filtered through a dynamic microfiltration unit in accordance with the method disclosed in GB2267811A. The dynamic microfiltratiion unit was a Pall Corporation dynamic microfiltration unit equipped with a 0.2 micron pore size nylon Ultipor® N66 membrane (Pall Corporation, East Hills, New York). The skim milk was fed at the rate of about 1000 ml/min into the dynamic microfiltration unit. The dynamic microfiltration unit was operated at 3450 rpm, and the filtrate flow was maintained at a constant rate of about 200 ml/min (850 l/m²/hr). The upstream pressure increase was monitored over time for the skim milk alone, as well as for skim milk to which had been added sufficient trisodium citrate prior to homogenization and filtration to yield citrate ion concentrations of about 0.01 wt.%, 0.1 wt.%, and 0.5 wt.%. A prefiltration integrity test, as well as a postfiltration integrity test, was conducted for each sample. The following data was obtained as a result of this experiment:

| | Upstream Pressure Increase (psi) | | | |
|---|---|---|---|---|
| Time (min) | 0 wt.% citrate | 0.01 wt.% citrate | 0.1 wt.% citrate | 0.5 wt.% citrate |
| 0 | 0 | 0 | 0 | 0 |
| 20 | 5 | 1 | 0.5 | 1 |
| 40 | 8 | 2 | 0.5 | 2 |
| 60 | 12 | 3 | 1 | 5 |
| 80 | 17 | 3 | 1.5 | 7 |
| 89 | 18 | | | |
| 100 | | 4 | 1.5 | 9.5 |
| 120 | | 4.5 | 2 | 12 |
| 140 | | 5 | 2.5 | 14 |
| 160 | | 6 | 2.5 | 15.5 |
| 180 | | 6.5 | 2.5 | 16 |
| 193 | | | | 18 |
| 200 | | 7.5 | 2.5 | |
| 220 | | 9 | 3 | |
| 240 | | 11 | | |
| 260 | | 15.4 | | |

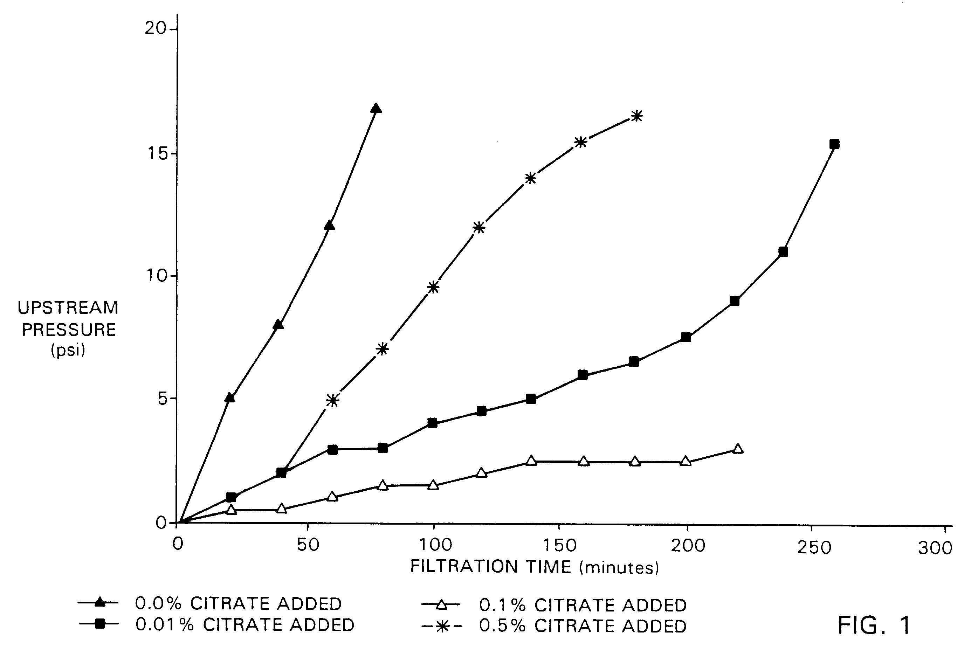

This data is depicted in Figure 1 as a graph of upstream pressure increase (psi) versus filtration time (minutes). The data points in the graph relating to the amount of citrate salt added to the skim milk are as follows: 0 wt.% (▲), 0.01 wt.% (■), 0.1 wt.% (△), and 0.5 wt.% (□) citrate salt.

As is apparent from the foregoing data, the addition of citrate ions to a protein-containing fluid prior to filtration through the porous medium greatly extends the time during which useful filtration of the protein-containing fluid can be carried out and significantly forestalls the clogging of the porous medium. In particular, it is clear from the data, particularly the graph, that pore clogging increases, and the flow through the porous medium becomes impeded, at an essentially exponential rate. The time during which useful filtration can be carried out is generally that time prior to the point at which the upstream applied pressure sharply increases to maintain constant filtrate flow, e.g., about 5 psi for skim milk in this example.

As shown in the raw data in the above table and as depicted in the graph of Figure 1, the present invention provides for a much longer period of time before this point of sharply increasing upstream applied pressures is reached. Specifically, the filtration with skim milk to which no citrate had been added almost immediately begins a sharp increase in upstream applied pressure, and reaches an upstream pressure increase of 5 psi in about 20 minutes. The present invention, however, allows for a considerable period of time during which the upstream applied pressure increases at a relatively flat rate with the result that an upstream pressure increase of 5 psi is not reached until about 140 minutes with 0.01 wt.% added citrate and well over 220 minutes with 0.1 wt.% added citrate. Even with as much as 0.5 wt.% added citrate, an upstream pressure increase of 5 psi is not reached for about 60 minutes. As a result, the present invention provides for a surprising 5-fold, 10-fold, or even higher increase in the useful filtration time of the porous medium.

In addition, the present invention significantly forestalls the essentially complete plugging of the pores of the porous medium as evidenced by the time required before an upstream pressure increase of 18 psi is required to maintain constant filtrate flow. While an upstream pressure increase of 18 psi was observed for the untreated skim milk in about 89 minutes, the same pressure increase was not observed for about 193 minutes (over twice as long a period of time) in the skim milk to which 0.5 wt.% citrate ions had been added. Even longer periods of time were observed for the skim milk to which lower amounts of citrate ions had been added. The skim milk to which 0.01 wt.% citrate ions had been added did not achieve an upstream pressure increase of 18 psi for over 260 minutes, while the skim milk to which 0.1 wt.% citrate ions had been added only achieved an upstream pressure increase of 3 psi in about 220 minutes.

### Example 2

This example further demonstrates the use of the present invention in forestalling the clogging of a porous medium in the filtration of a protein-containing fluid through the addition of citrate ions to the protein-containing fluid prior to filtration through the porous medium.

The procedure of Example 1 was repeated, except that milk containing 2% fat was used instead of skim milk. The upstream pressure increase was monitored over time for the 2% fat milk alone, as well as for 2% fat milk to which had been added sufficient trisodium citrate prior to homogenization and filtration to yield added citrate ion concentrations of about 0.02 wt.%, 0.1 wt.%, and 0.5 wt.%. A prefiltration integrity test, as well as a postfiltration integrity test, was conducted for each sample. The following data was obtained as a result of this experiment:

| | Upstream Pressure Increase (psi) | | | |
|---|---|---|---|---|
| Time (min) | 0 wt.% citrate | 0.02 wt.% citrate | 0.1 wt.% citrate | 0.5 wt.% citrate |
| 0 | 0.5 | 0 | 0 | 0.5 |
| 5 | 14.5 | 5.5 | 2 | 2.5 |
| 10 | 16.5 | 8 | 2 | 2.5 |
| 20 | | 10 | 2.5 | 3 |
| 30 | | 12.5 | 4 | 3 |
| 40 | | 15 | 4 | 3.5 |
| 50 | | | 4 | 3.5 |
| 60 | | | 5 | 3.5 |
| 70 | | | 5.5 | 4 |
| 80 | | | 6 | 4.5 |
| 90 | | | 6 | 5 |
| 100 | | | 6.5 | 5 |
| 110 | | | 7 | 6 |
| 120 | | | 7.5 | 7 |
| 130 | | | 7.5 | 7 |
| 140 | | | 8 | 7.5 |
| 150 | | | 8.5 | 7.5 |
| 160 | | | 9 | 8 |
| 170 | | | 11 | 8.5 |
| 180 | | | 12 | 10 |
| 190 | | | 13 | 10.5 |
| 200 | | | 13.5 | 11.5 |
| 210 | | | 14 | 12 |
| 220 | | | 15 | 12.5 |
| 230 | | | | 14 |
| 245 | | | | 15 |

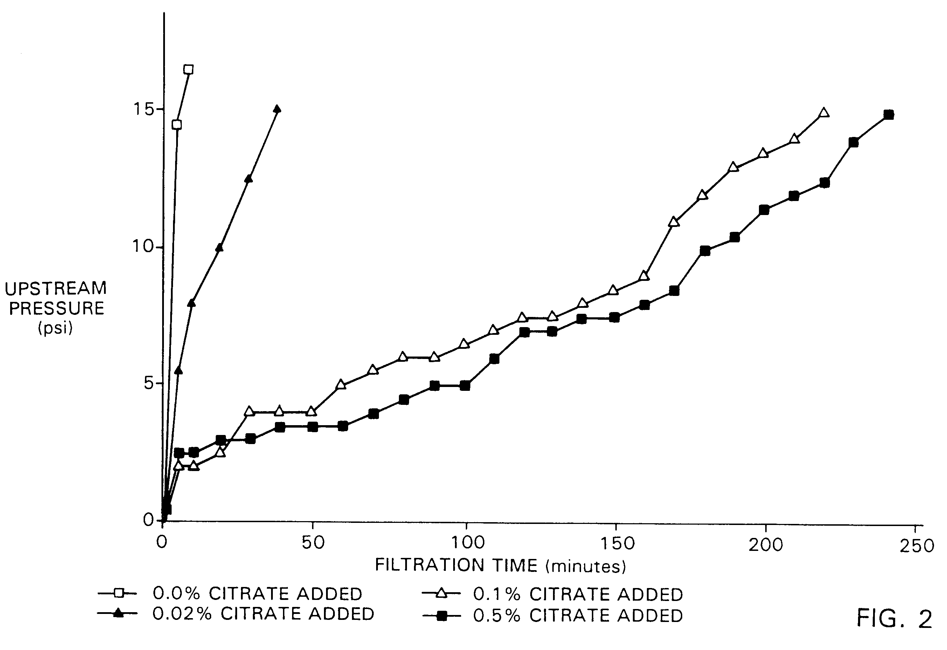

This data is depicted in Figure 2 as a graph of upstream pressure increase (psi) versus filtration time (minutes). The data points in the graph relating to the amount of citrate salt added to the 2% fat milk are as follows: 0 wt.% (□), 0.02 wt.% (▲), 0.1 wt.% (△), and 0.5 wt.% (■) citrate salt.

As is apparent from the foregoing data, the addition of citrate ions to a protein-containing fluid prior to filtration through the porous medium greatly extends the time during which useful filtration of the protein-containing fluid can be carried out and significantly forestalls the clogging of the porous medium. In particular, it is clear from the data, particularly the graph, that pore clogging increases, and the flow through the porous medium becomes impeded, at an essentially exponential rate. The time during which useful filtration can be carried out is generally that time prior to the point at which the upstream applied pressure sharply increases to maintain constant filtrate flow, e.g., about 5 psi for 2% fat milk in this example.

As shown in the raw data in the above table and as depicted in the graph of Figure 2, the present invention provides for a much longer period of time before this point of sharply increasing upstream applied pressures is reached. Specifically, the filtration with 2% fat milk to which no citrate had been added almost immediately begins a sharp increase in upstream applied pressure, and reaches an upstream pressure increase of 5 psi in only one or two minutes. The present invention, however, allows for a considerable period of time during which the upstream applied pressure increases at a relatively flat rate with the result that an upstream pressure increase of 5 psi is not reached until about 5 minutes with 0.02 wt.% added citrate, until about 60 minutes with 0.1 wt.% added citrate, and until about 90 minutes with 0.5 wt.% added citrate. As a result, the present invention provides for a surprising 5-fold to 30-fold, or even higher, increase in the useful filtration time of the porous medium.

In addition, the present invention significantly forestalls the essentially complete plugging of the pores of the porous medium as evidenced by the time required before an upstream pressure increase of 15 psi is required to maintain constant filtrate flow. While an upstream pressure increase of 15 psi was observed for the untreated 2% fat milk in about 6 minutes, the same pressure increase was not observed for about 245 minutes (over forty times as long a period of time) in the 2% fat milk to which 0.5 wt.% citrate ions had been added. Even smaller quantities of added citrate resulted in relatively long periods of time before an upstream pressure increase of 15 psi was observed. The 2% fat milk to which 0.02 wt.% citrate ions had been added did not achieve an upstream pressure increase of 15 psi for about 37 minutes, while the 2% fat milk to which 0.1 wt.% citrate ions had been added did not achieve an upstream pressure increase of 15 psi for about 220 minutes.

These results further demonstrate that the addition of citrate ions to a protein-containing fluid greatly extends the time during which useful filtration of the milk can be carried out and significantly forestalls the clogging of the porous medium used to filter that protein-containing fluid.

All of the references cited herein, including publications, patents, and patent applications, are hereby incorporated in their entireties by reference.

While this invention has been described with an emphasis upon preferred embodiments, it will be obvious to those of ordinary skill in the art that variations of the preferred embodiments may be used and that it is intended that the invention may be practiced otherwise than as specifically described herein. Accordingly, this invention includes all modifications encompassed within the spirit and scope of the invention as defined by the following claims.

## Claims

1. A method of filtering a protein-containing fluid comprising adding citrate ions to a protein-containing fluid prior to passing said protein-containing fluid through a porous medium.

2. The method of claim 1, wherein said citrate ions are added to said protein-containing fluid in an amount of no more than about 0.5 wt.% of said protein-containing fluid.

3. The method of claim 2, wherein said citrate ions are added to said protein-containing fluid in an amount of about 0.01 wt.% to about 0.2 wt.% of said protein-containing fluid.

4. The method of claim 1, wherein said citrate ions are added to said protein-containing fluid by adding a citrate salt to said protein-containing fluid.

5. The method of claim 4, wherein said citrate salt is selected from the group consisting of potassium and sodium citrate salts and combinations thereof.

6. The method of claim 5, wherein said citrate salt is trisodium citrate.

7. The method of claim 1, wherein said protein-containing fluid is a natural protein-containing fluid.

8. The method of claim 7, wherein said protein-containing fluid is selected from the group consisting of milk, beer, and wine.

9. The method of claim 8, wherein said protein-containing fluid is milk.

10. The method of claim 1, wherein said porous medium is a microporous membrane.

11. The method of claim 10, wherein said microporous membrane is a polyamide membrane.

12. A protein-containing fluid prepared in accordance with the method of claim 1.

13. The protein-containing fluid of claim 12, wherein said protein-containing fluid is a natural protein-containing fluid.

14. The protein-containing fluid of claim 13, wherein said protein-containing fluid is selected from the group consisting of milk, beer, and wine.

15. The protein-containing fluid of claim 14, wherein said protein-containing fluid is milk.

16. Protein-containing fluid which has been rendered sterile through filtration and to which has been added citrate ions prior to filtration.

17. The protein-containing fluid of claim 16, wherein said protein-containing fluid is a natural protein-containing fluid.

18. The protein-containing fluid of claim 17, wherein said protein-containing fluid is selected from the group consisting of milk, beer, and wine.

19. The protein-containing fluid of claim 18, wherein said protein-containing fluid is milk.

20. Sterile milk characterized by the absence of Bacillus cereus bacteria and the presence of citrate ions in addition to those found in natural milk.

21. Sterile milk characterized by the absence of campylobacteria and the presence of citrate ions in addition to those found in natural milk.

22. Sterile milk characterized by the absence of listeria and the presence of citrate ions in addition to those found in natural milk.

23. Sterile milk characterized by the absence of E. coli and the presence of citrate ions in addition to those found in natural milk.

24. Milk having a bacterial content of less than about 10³ bacteria per ml, having retained more organoleptic components than that found in pasteurized milk with the same bacterial content, and having citrate ions in addition to those found in natural milk.
